# DEMANDE DE BREVET EUROPEEN

(11) **EP 3 306 717 A1**
(43) Date de publication de la demande: **11.04.2018**
(21) Numéro de dépôt: 17193718.8
(22) Date de dépôt: 28.09.2017
(51) Int. Cl.: H01M 4/92, C25B 11/04

(54) **PROCEDE DE PREPARATION D'UN CATALYSEUR SUPPORTE PAR UN MATERIAU CARBONE MODIFIE AVEC DU POLYBENZIMIDAZOLE**

(30) Priorité: 07.10.2016 FR 1659670
(71) Demandeur: Commissariat à l'Energie Atomique et aux Energies Alternatives, 75015 Paris (FR)
(72) Inventeur: THOMAS, Yohann, 38000 GRENOBLE (FR); FOUDA-ONANA, Frédéric, 97160 LE MOULE (GUADELOUPE) (FR); HEITZMANN, Marie, 38650 SINARD (FR); JACQUES, Pierre-André, 38000 GRENOBLE (FR); REMY, Emeline, 38950 SAINT MARTIN LE VINOUX (FR)
(74) Mandataire: Cabinet Laurent & Charras

(57) **Abrégé**

La présente invention concerne un procédé de préparation d'un catalyseur supporté comprenant au moins les étapes successives suivantes :
a) traitement thermique d'un matériau carboné (C), à une température comprise entre 1400°C et 2300°C,
le matériau carboné (C) étant choisi dans le groupe comprenant les nanotubes de carbone, le graphène, et les noirs de carbone,
b) obtention d'un matériau carboné traité thermiquement (Cₜ),
c) modification du matériau carboné Cₜ par mise en contact avec au moins un polybenzimidazole (PBI),
d) obtention d'un matériau carboné modifié (Cₜ-PBI),
e) dépôt de particules métalliques (M) sur le matériau carboné modifié (Cₜ-PBI),
f) obtention d'un catalyseur supporté (M/Cₜ-PBI).

## Description

### DOMAINE DE L'INVENTION

La présente invention concerne un procédé permettant de préparer un catalyseur métallique supporté par un matériau carboné. Ce matériau carboné contient également du polybenzimidazole.

Les domaines d'utilisation de la présente invention concerne notamment les piles à combustibles et les électrolyseurs.

### ETAT ANTERIEUR DE LA TECHNIQUE

Une pile à combustible permet de transformer de l'énergie chimique en énergie électrique à partir d'un combustible, tel que l'hydrogène, le méthanol, l'éthanol ou encore l'acide formique. Cette conversion énergétique est réalisée au niveau du coeur de la pile qui comprend généralement une anode, un électrolyte et une cathode.

L'électrolyte des piles à combustible à membrane échangeuse de protons (PEMFC, de l'acronyme anglo-saxon « *proton exchange membrane fuel cell* »), est constitué d'une membrane échangeuse de protons. Ainsi, les PEMFC comprennent un assemblage membrane électrodes (AME) constitué d'une anode, d'une membrane échangeuse de protons et d'une cathode.

Le fonctionnement des PEMFC implique une réaction d'oxydation du combustible à l'anode, et une réaction de réduction du comburant à la cathode.

Lorsque le combustible est l'hydrogène, l'oxydation à l'anode génère des protons H⁺ et des électrons. Les électrons sont dirigés vers la cathode via un circuit externe à la pile à combustible, alors que les protons traversent la membrane. A la cathode, la réduction du comburant (oxygène) permet de former de l'eau en présence de ces protons et électrons.

Les électrodes d'une pile comprennent une couche active permettant d'assurer les réactions électrochimiques. Cette couche active est donc exposée à des conditions drastiques liées notamment à l'environnement oxydant ou réducteur, à l'éventuelle forte acidité locale, à l'apparition de points chauds, ou aux phénomènes d'assèchement et de noyage.

Une couche active comprend généralement un catalyseur, par exemple des nanoparticules supportées par un matériau carboné. Les supports carbonés couramment utilisés incluent le noir de carbone de forme sphérique, le graphène de forme plane, et les nanotubes de carbone (NTC) de forme cylindrique.

De nombreux travaux ont permis d'améliorer les propriétés de la couche active, que ce soit au niveau du support carboné ou du catalyseur (activité, dispersion...).

Le document EP 2 811 563 décrit un procédé de modification de la surface de nanotubes de carbone avec du polybenzimidazole. Cette modification permet d'améliorer la résistance à la dégradation du matériau carboné.

Des supports à base de matériaux carbonés hautement graphitisés ont également été utilisés pour atténuer la dégradation due à la corrosion, grâce aux propriétés de surface de ces supports présentant moins de défauts. En effet, la dégradation d'un support carboné est généralement favorisée par la présence de défauts. En outre, l'hydrophobicité de ces matériaux contribue également à l'amélioration de la résistance à la dégradation, ladite hydrophobicité étant plus importante que celle de matériaux carbonés non graphitisés.

Cependant, l'état de surface des supports hautement graphitisés présente un inconvénient. L'absence ou quasi absence de défauts diminue le nombre de points d'ancrage où le catalyseur peut se déposer. En effet, de manière générale, le catalyseur est déposé par réduction d'un précurseur en présence du support carboné. Lors du dépôt du catalyseur, des ions métalliques se fixent sur des points d'ancrage du support carboné avant d'être réduits en métal. Par conséquent, l'aptitude d'un support carboné à supporter un catalyseur dépend également de son état de surface. En d'autres termes, le nombre potentiel de points de nucléations du catalyseur est généralement proportionnel au nombre de points d'ancrage.

Ainsi, même si ces supports présentent une bonne stabilité vis-à-vis des conditions d'utilisation d'une pile à combustible au cours du temps, ils ne permettent pas d'obtenir une bonne dispersion du support de catalyseur et d'avoir suffisamment de points d'ancrage pour obtenir de petites particules de catalyseur.

En effet, un nombre de points d'ancrage important permet également d'obtenir une répartition homogène et dispersée de particules de catalyseur de petite taille.

Par conséquent, il existe toujours un besoin d'optimiser le catalyseur supporté en termes de la quantité utile au bon fonctionnement de la pile à combustible, de répartition ou de résistance aux conditions d'utilisation.

La présente invention apporte une solution à cette problématique grâce à un catalyseur supporté par un matériau carboné modifié.

### EXPOSE DE L'INVENTION

Le Demandeur a mis au point un procédé mettant en oeuvre le traitement d'un matériau carboné par un polybenzimidazole en vue de son utilisation comme support de catalyseur.

Le catalyseur obtenu grâce à ce procédé présente une durabilité améliorée par rapport aux catalyseurs sur supports carbonés conventionnels. En outre, il présente des particules métalliques (catalyseur) de plus petite taille, dont la dispersion est améliorée.

Plus précisément, la présente invention concerne un procédé de préparation d'un catalyseur supporté comprenant au moins les étapes successives suivantes :
a) traitement thermique d'un matériau carboné (C), à une température comprise entre 1400°C et 2300°C,
   le matériau carboné (C) étant choisi dans le groupe comprenant les nanotubes de carbone, le graphène, et les noirs de carbone,
b) obtention d'un matériau carboné traité thermiquement (Cₜ),
c) modification du matériau carboné traité thermiquement (Cₜ) issu de l'étape a) par mise en contact avec au moins un polybenzimidazole (PBI),
d) obtention d'un matériau carboné modifié (Cₜ-PBI),
e) dépôt de particules métalliques (M) sur le matériau carboné modifié (Cₜ-PBI),
f) obtention d'un catalyseur supporté (M/Cₜ-PBI).

Comme déjà indiqué, le matériau carboné C est traité thermiquement (étape a)) préalablement à sa modification avec le PBI.

Ce traitement thermique est réalisé à une température comprise entre 1400°C et 2300°C, avantageusement entre 1500°C et 2000°C.

Le matériau carboné C peut notamment être constitué de nanotubes de carbone simple-feuillet ou de nanotubes de carbone multi-feuillets.

Les noirs de carbone sont de forme sphérique alors que le graphène est de forme plane, et les nanotubes de carbone de forme cylindrique.

Le traitement thermique permet de purifier le matériau C. Ainsi, le matériau Cₜ présente une quantité d'impuretés inférieure à celle du matériau C, avantageusement aucune impureté. Par impureté, on entend toute trace organique ou minérale (autre que le matériau carboné) provenant des précurseurs utilisés lors de la synthèse du matériau carboné.

De manière avantageuse, le traitement thermique est réalisé pendant une durée comprise entre une heure et 24 heures, avantageusement entre deux heures et douze heures.

Le matériau Cₜ est ensuite modifié avec un polymère lors de l'étape c).

Pour cela, le matériau carboné traité thermiquement Cₜ issu de l'étape a) est mis en contact avec au moins un polybenzimidazole (PBI). Cette mise en contact permet de modifier le matériau carboné Cₜ de manière à former le matériau Cₜ-PBI. La mise en contact permet de modifier la surface du matériau Cₜ avec du PBI. Elle est avantageusement réalisée par adsorption d'au moins un polybenzimidazole, notamment en solution.

Le PBI est avantageusement choisi dans le groupe comprenant le poly[2,2'-(m-phénylène)-5,5'-bibenzimidazole] ; le poly[2,2'-(*p*-phénylène)-5,5'-bibenzimidazole] ; le poly(2,5-benzimidazole) ; le poly[2,2'-(*p*-oxydiphénylène)-5,5'-bibenzimidazole] ; le poly(2,2'-(m-phenylene)-5,5'-bibenzimidazole) ; le poly(2,6-(2,6-naphtyliden)-1,7-dihydrobenzo[1,2-d;4,5-d']diimidazole) ; le poly(2,2'-(2,6-naphtyliden)-5,5'-bibenzimidazole) ; le poly(2,2'-(2,6-pyridin)-5,5'-bibenzimidazole) ; les polybenzimidazoles partiellement ou totalement fluorés (substitution des atomes d'hydrogène par des atomes de fluor) ; et leurs mélanges.

De manière avantageuse, le matériau Cₜ est, préalablement à sa mise en contact avec le PBI, dispersé dans un solvant organique, par exemple à l'aide d'une sonde à ultrasons.

L'homme du métier saura choisir l'appareillage adapté relatif aux sondes à ultrasons mentionnées ci-avant et ci-après. Il peut notamment s'agir d'un appareillage de type Bioblock Scientific, modèle : Vibra-Cell™ 75041. Le mode de fonctionnement est avantageusement en mode pulsé en alternant une seconde en marche, une seconde en arrêt, le tout pendant la durée voulue.

Ce solvant de dispersion peut être choisi dans le groupe comprenant le diméthylacétamide (DMAc), le N-méthyl-2-pyrrolidone (NMP), le diméthylsulfone (DMSO), le diméthylformamide (DMF), et l'acide méthanesulfonique (MSA).

Préalablement à la mise en contact de l'étape c), le PBI est également avantageusement mis en solution dans un solvant organique. Le PBI peut être solubilisé dans un solvant choisi dans le groupe comprenant le diméthylacétamide (DMAc), le N-méthyl-2-pyrrolidone (NMP), le diméthylsulfone (DMSO), le diméthylformamide (DMF), et l'acide méthanesulfonique (MSA).

Ainsi, la mise en contact entre le matériau Cₜ et le PBI peut notamment être réalisée par addition d'une suspension de Cₜ dans du DMAc à une solution de PBI dans du DMAc. Le matériau Cₜ peut être mis en suspension dans un solvant choisi dans le groupe comprenant le diméthylacétamide (DMAc), le N-méthyl-2-pyrrolidone (NMP), le diméthylsulfone (DMSO), le diméthylformamide (DMF), et l'acide méthanesulfonique (MSA).

La mise en contact dure avantageusement entre 10 minutes et 24 heures, plus avantageusement entre une heure et douze heures.

Elle est avantageusement réalisée à une température comprise entre 15°C et 80°C, plus avantageusement entre 20°C et 50°C.
D'autre part, elle est avantageusement réalisée sous agitation mécanique.

Lorsque l'étape c) est réalisée en solution, la mise en contact est avantageusement suivie d'une étape de séparation solide/liquide permettant d'isoler le matériau carboné modifié Cₜ-PBI. La séparation solide/liquide est avantageusement réalisée par filtration.

Ensuite, le matériau carboné modifié Cₜ-PBI est avantageusement séché à une température comprise entre 60°C et 100°C, plus avantageusement entre 75°C et 85°C. Le séchage peut notamment être réalisé dans une étuve ou sous vide.

La durée du séchage est avantageusement comprise entre une heure et 48 heures, plus avantageusement entre douze heures et 24 heures.

Le matériau Cₜ-PBI résultant de la modification de Cₜ avec le PBI présente un rapport massique entre le matériau carboné Cₜ et le PBI avantageusement compris entre 50 et 95, plus avantageusement entre 60 et 90.

Ainsi, le Cₜ-PBI obtenu présente un pourcentage massique de PBI avantageusement compris entre 5% et 50%, par rapport à la masse de Cₜ-PBI, plus avantageusement entre 10% et 40%.

A l'issue de l'étape d), des particules métalliques M sont déposées sur le matériau carboné modifié Cₜ-PBI (étape e)).

De manière générale, les particules métalliques M sont des particules d'un métal ayant un degré d'oxydation égal à 0, ledit métal étant avantageusement choisi dans le groupe comprenant le platine, les alliages de platine (nickel, cobalt, or, palladium, cuivre, étain et toutes autres combinaisons ternaires ou quaternaires), l'iridium, le palladium (alliages de palladium nickel).

Le dépôt des particules peut être réalisé en solution, notamment en présence d'un précurseur de particules métalliques. Pour cela, le matériau Cₜ-PBI est dispersé dans un solvant avantageusement choisi dans le groupe comprenant l'eau, l'éthylène glycol, et l'acide formique. La dispersion du matériau Cₜ-PBI peut être réalisée à l'aide d'une sonde à ultrasons.

Ainsi, selon un mode de réalisation particulier de l'invention, l'étape e) est réalisée, en solution, par réduction d'un précurseur de particules métalliques M en présence de Cₜ-PBI. L'étape e) est ainsi avantageusement réalisée selon les étapes suivantes :
- dispersion du matériau Cₜ-PBI, avantageusement dans l'eau,
- préparation d'une solution contenant un précurseur de particules métalliques, avantageusement dans l'eau,
- addition de la solution de précurseur dans la dispersion du matériau Cₜ-PBI,
- avantageusement, agitation du mélange résultant de cette addition, par exemple à l'aide d'une sonde à ultrasons,
- addition d'un agent réducteur,
- réduction du précurseur.

Le mélange contenant le Cₜ-PBI et le précurseur est avantageusement mélangé pendant une durée comprise entre une heure et 24 heures préalablement à l'addition de l'agent réducteur. Cette agitation est réalisée à une température comprise entre 25°C et 200°C, avantageusement entre 35°C et 120°C.

De manière avantageuse, le précurseur de particules métalliques est choisi dans le groupe comprenant H₂PtCl₆ ; K₂PtCl₆·sous forme hydratée (6H₂O) ou non; Na₂PtCl₆·sous forme hydratée (6H₂O) ou non ; (NH₄)₂PtCl₆ H₂PtBr₆· sous forme hydratée (xH₂O) ou non ; H₂Pt(OH)₆ ; et Pt(C₅H₇O₂)₂.

La mise en solution du précurseur de particules métalliques est avantageusement réalisée dans un solvant choisi dans le groupe comprenant l'eau, l'éthylène glycol, et l'acide formique.

Après addition, le précurseur est réduit en présence d'un agent réducteur de manière à former in situ des particules d'un métal dont le degré d'oxydation est égal à 0.

Cet agent réducteur est avantageusement choisi dans le groupe comprenant l'éthylène glycol, l'acide formique, et les borohydrures, notamment NaBH₄. Il peut notamment s'agir du solvant de la suspension de Cₜ-PBI et/ou du solvant de la solution de précurseur.

La réduction du précurseur de particules métalliques est avantageusement réalisée à une température comprise entre 25°C et 200°C, plus avantageusement entre 50°C et 170°C.

La durée de la réduction est avantageusement comprise entre une heure et 24 heures, plus avantageusement entre deux heures et dix-huit heures.

En outre, la réduction est avantageusement réalisée sous agitation mécanique.

Une fois les particules métalliques déposées, le mélange peut être soumis à une séparation solide/liquide pour isoler le catalyseur supporté M/Cₜ-PBI. Cette étape est avantageusement réalisée par filtration.

Le catalyseur supporté M/Cₜ-PBI peut ensuite être lavé, par exemple avec de l'eau et/ou de l'acétone.

Le catalyseur supporté M/Cₜ-PBI ainsi obtenu est avantageusement séché, par exemple dans une étuve. Le séchage peut être réalisé à une température comprise entre 60°C et 120°C, plus avantageusement entre 80°C et 100°C. La durée du séchage est avantageusement comprise entre six heures et quarante-huit heures, plus avantageusement entre douze heures et vingt-quatre heures.

Le M/Cₜ-PBI ainsi obtenu présente un pourcentage massique de particules métalliques M avantageusement compris entre 5% et 60%, par rapport à la masse de M/Cₜ-PBI, plus avantageusement entre 10% et 50%.

La présente invention concerne également le catalyseur supporté obtenu par le procédé détaillé ci-dessus et l'électrode comprenant ce catalyseur supporté. Comme déjà indiqué, ce catalyseur supporté présente des particules de plus petite taille et mieux dispersées que dans les catalyseurs supportés obtenus selon les procédés de l'art antérieur.

La taille des particules métalliques (M) au sein du catalyseur supporté M/Cₜ-PBI est avantageusement comprise entre 1 nanomètre et 5 nanomètres, plus avantageusement entre 2 nanomètres et 5 nanomètres. En revanche, elle est généralement de l'ordre de 5 nanomètres à 6 nanomètres lorsque le matériau carboné n'a pas été modifié avec du PBI.

Ce catalyseur est avantageusement intégré dans une électrode. Une électrode comprenant un catalyseur supporté selon l'invention présente une meilleure performance et une meilleure durabilité par rapport aux électrodes de l'art antérieur.

L'électrode, avantageusement une cathode, peut être utilisée dans une pile à combustible à membrane échangeuse de protons, dans une batterie ou dans un électrolyseur à membrane échangeuse de protons.

Ainsi, la présente invention concerne également une pile à combustible à membrane échangeuse de protons, une batterie ou un électrolyseur à membrane échangeuse de protons comprenant cette électrode.

L'invention et les avantages qui en découlent ressortiront mieux des figures et exemples suivants donnés afin d'illustrer l'invention et non de manière limitative.

### BREVE DESCRIPTION DES FIGURES

La figure 1 correspond à une image obtenue par microscopie électronique à balayage par transmission du catalyseur supporté M/Cₜ-PBI selon l'invention.
La figure 2 correspond à une image obtenue par microscopie électronique à balayage par transmission d'un catalyseur supporté M/Cₜ de particules métalliques sur un matériau carboné traité thermiquement.
La figure 3 correspond à une image obtenue par microscopie électronique à balayage par transmission d'un catalyseur supporté M/C-PBI de particules métalliques sur un matériau carboné modifié avec du PBI.
La figure 4 correspond à une image obtenue par microscopie électronique à balayage par transmission d'un catalyseur supporté M/C de particules métalliques sur un matériau carboné.
La figure 5 illustre la dégradation par analyse thermogravimétrique du catalyseur supporté M/Cₜ-PBI selon l'invention et d'un catalyseur supporté M/C-PBI.
La figure 6 représente la courbe de polarisation et la courbe de densité de puissance d'assemblages membrane électrodes comprenant un catalyseur supporté M/Cₜ-PBI selon l'invention et des catalyseurs supportés M/C-PBI et M/C.
La figure 7 représente les courbes de polarisation et de densité de puissance d'assemblages membrane électrode comprenant un catalyseur supporté M/Cₜ-PBI selon l'invention et des catalyseurs supportés M/C-PBI et M/C après un test de vieillissement.
La figure 8 correspond à une image obtenue par microscopie électronique à balayage par transmission du catalyseur supporté M/C-PBI après un test de vieillissement.
La figure 9 correspond à une image obtenue par microscopie électronique à balayage par transmission du catalyseur supporté M/Cₜ-PBI selon l'invention après un test de vieillissement.

### EXEMPLES DE REALISATION DE L'INVENTION

Plusieurs catalyseurs ont été préparés à partir d'un matériau carboné (C), de particules de platine (M) et éventuellement de PBI. Ces catalyseurs ont ensuite été testés.

Pour cela, des particules de platine (M) sont incorporées dans un matériau carboné (C), qui a éventuellement été préalablement traité thermiquement et modifié en présence de PBI.

Dans ces exemples, une sonde à ultrasons ayant un diamètre de 13 mm a été utilisée avec un appareillage de type Bioblock Scientific, modèle : Vibra-Cell™ 75041. La puissance de l'appareil est de 750 W (il fonctionne à 20 kHz). La puissance de fonctionnement est rapportée à la puissance de cet appareil. Ainsi, une puissance de fonctionnement de 70% correspond à 0.7 x 750 W = 525 Watts. Le mode de fonctionnement dit « pulsé » correspond à une seconde en marche, une seconde en arrêt, le tout pendant la durée voulue, par exemple 15 minutes.

### 1/ Traitement thermique d'un matériau carboné C

1 g de nanotubes de carbone (matériau carboné C) (référence NC7000™ de chez Nanocyl) est soumis à un traitement thermique à une température entre 1400°C et 2300°C pendant deux heures à quatre heures.

Ce traitement permet d'obtenir des nanotubes de carbone traités thermiquement : Cₜ.

### 2/ Modification d'un matériau carboné (Cₜ ou C) en présence de PBI

Un matériau carboné (1 g de Cₜ ou C) est dispersé dans 100 mL de diméthylacétamide (DMAc) à l'aide d'une sonde à ultrasons.
Ce matériau carboné est ensuite ajouté à une solution de 1 g de PBI dans 400 mL de DMAc. Le mélange ainsi obtenu est alors agité pendant 12 heures à température ambiante.

Ce mélange est ensuite filtré, puis le solide obtenu est rincé trois fois avec du DMAc, puis trois fois avec de l'eau distillée.

Le matériau carboné ainsi modifié (Cₜ-PBI ou C-PBI) est séché pendant 48 heures dans une étuve à 95°C.

### 3/ Incorporation de particules de platine dans un matériau carboné modifié (Cₜ-PBI ou C-PBI)

Le matériau carboné modifié (500 mg de Cₜ-PBI ou C-PBI) est mis en suspension dans 50 mL d'eau distillée à l'aide d'une sonde à ultrasons (puissance : 70% fonctionnant par pulse ; temps d'agitation : 1 seconde, temps de repos : 1 seconde) pendant 15 minutes.

Une solution de 885 mg de H₂PtCl₆, 6H₂O dans 5 mL d'eau déionisée est ajoutée goutte à goutte à la suspension de Cₜ-PBI ou de C-PBI.

La suspension est ensuite traitée à l'aide d'une sonde à ultrasons (puissance : 70% fonctionnant par pulse ; temps d'agitation : 1 seconde, temps de repos : 1 seconde) pendant 15 minutes.

Cette suspension est ensuite ajoutée à 500 mL d'éthylène glycol, puis à nouveau traitée à l'aide d'une sonde à ultrasons (puissance : 70% fonctionnant par pulse ; temps d'agitation : 1 seconde, temps de repos : 1 seconde) pendant 15 minutes.

La suspension est ensuite chauffée à 110°C et maintenue à reflux pendant 12 heures.

Le catalyseur supporté (M/C-PBI ou M/Cₜ-PBI) est ensuite récupéré par un système de filtration sous vide et rincé plusieurs fois à l'eau déionisée et à l'acétone, puis placé à l'étuve à 95°C durant 24 heures pour un séchage complet.

### 4/ Incorporation de particules de platine dans un matériau carboné non modifié (C ou Cₜ)

Le mode opératoire du point 3/ a été suivi pour préparer des catalyseurs de type M/C et M/Cₜ, c'est-à-dire à partir de carbone non modifié mais éventuellement traité thermiquement.

Le tableau 1 ci-dessous récapitule les catalyseurs qui ont été préparés et la quantité de platine incorporée.

**Tableau 1 : Composition des catalyseurs préparés**

| Catalyseur supporté | Matériau carboné | Quantité de platine (% massique) |
|---|---|---|
| INV-1 M/Cₜ-PBI (figure 1) | Cₜ-PBI | 37 (% Pt/Cₜ-PBI) |
| CE-1 M/Cₜ (figure 2) | Cₜ | 7 (% Pt/Cₜ) |
| CE-2 M/C-PBI (figure 3) | C-PBI | 46 (% Pt/C-PBI) |
| CE-3 M/C (figure 4) | C | 37 (% Pt/C) |

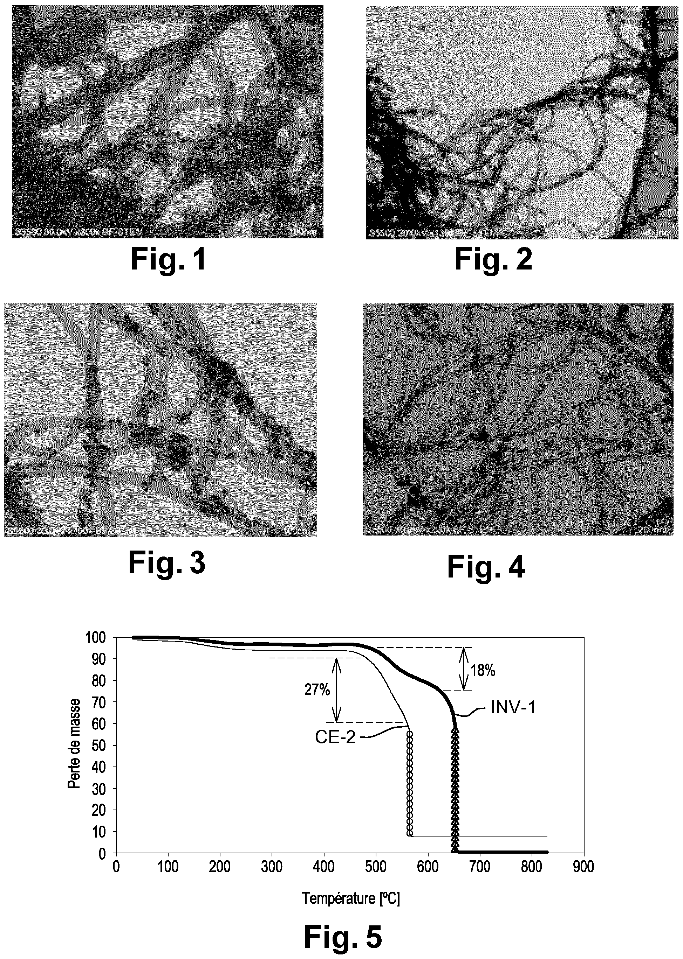

Les NTC traités thermiquement, mais non modifiés par du PBI (CE-1), ne présentent pas suffisamment de points d'ancrage pour permettre le dépôt de la totalité du platine mis en solution. Les figures 1 à 4 corroborent ces résultats et montrent que le catalyseur selon l'invention (INV-1) présente les plus petites particules de platine et la meilleure dispersion de celles-ci.

### 5/ Analyse thermogravimétrique

Le pourcentage de PBI greffé à la surface du matériau carboné (INV-1 et CE-2) a été déterminé par une analyse thermogravimétrique (ATG) réalisée sous air (figure 5 : perte de masse en fonction de la température).
La première perte de masse observée aux alentours de 450-500°C correspond au PBI.

La seconde perte de masse au-delà de 550°C correspond à la dégradation des nanotubes de carbone. Il est à noter que ces analyses ont été réalisées avant le dépôt de platine.

Ainsi, la figure 5 montre que la quantité de PBI fixée sur la surface d'un matériau carboné ayant subi un traitement thermique (conformément à INV-1) est moindre (18% en masse) que la quantité de PBI fixée sur un matériau carboné n'ayant pas subi de traitement thermique (CE-2 ; 27% en masse).

En revanche, le matériau Cₜ-PBI présente une meilleure stabilité thermique que le matériau C-PBI.

### 6/ Utilisation des catalyseurs supportés dans des piles

Trois assemblages membrane électrodes (AME) ont été préparés par pressage à chaud d'une membrane avec deux électrodes.

L'électrode en anode comprend un catalyseur commercial de platine supporté sur du noir de carbone (de type Vulcan®) avec un chargement de 0,1 mg_{Pt}/cm².

L'électrode en cathode comprend l'un des catalyseurs supportés M/Cₜ-PBI (INV-1) M/C-PBI (CE-2) ou M/C (CE-3). Cette électrode a été réalisée en déposant, par pulvérisation sur une GDL (couche de diffusion gazeuse), un mélange contenant un catalyseur supporté (M/Cₜ-PBI, M/C-PBI, M/C), de l'isopropanol, de l'eau utlra-pure et du Nafion® (extrait sec à 22% en poids). Le chargement de la cathode est de 0,4 mg_{Pt}/cm².

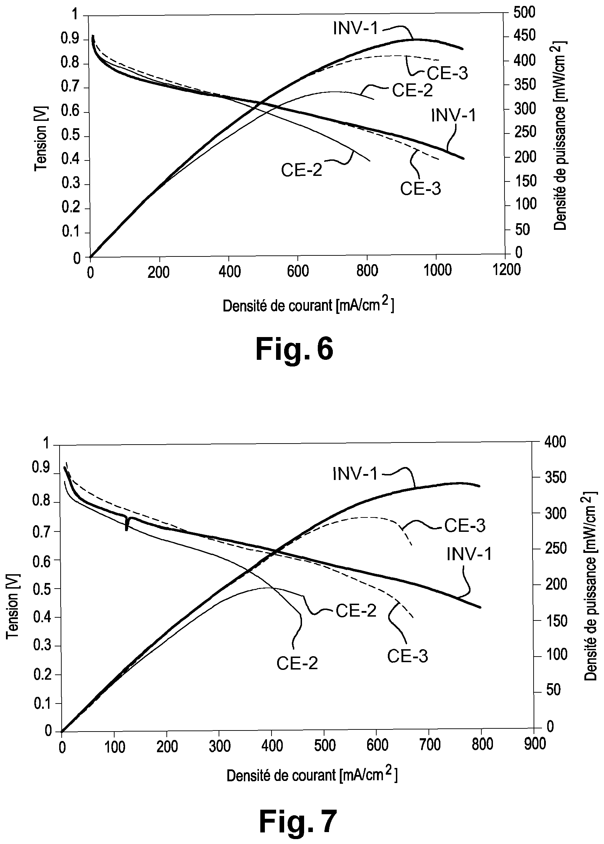

La figure 6 représente la courbe de polarisation et la courbe de densité de puissance en fonction de la densité de courant.

Ces courbes ont été obtenue en conditions opératoires dites automobile (80°C ; 50% d'humidité relative ; 1,5 bar de H₂ à l'anode et 1,5 bar d'air à la cathode avec une stoechiométrie H₂/air de 1,2/2) pour chacun des assemblages membrane électrodes.

Les résultats obtenus en mono-cellule montrent clairement que l'utilisation du catalyseur INV-1 à la cathode permet d'obtenir les meilleures performances. Une densité de puissance maximale de 450 mW/cm² est obtenue pour le catalyseur supporté selon l'invention (INV-1), contre 416 mW/cm² pour le catalyseur supporté n'ayant subi ni traitement thermique, ni modification de surface (CE-3), et seulement 341 mW/cm² pour le catalyseur supporté n'ayant pas subi de traitement thermique, mais comportant du PBI (CE-2).

### 7/ Tests de vieillissement

Les trois assemblages AME sont soumis à 30 000 cycles entre 0,6 et 1 V sous H₂/N₂ à l'anode et à la cathode respectivement. Ces conditions permettent de réaliser des tests de vieillissement accéléré.

La figure 7 représente les courbes de polarisation et de densité de puissance en fonction de la densité de courant. Ces courbes ont été obtenues après les 30 000 cycles de vieillissement. Ces courbes montrent que l'utilisation du catalyseur supporté selon l'invention (INV-1) à la cathode présente une meilleure durabilité. En effet, après les 30 000 cycles, la perte de puissance maximale est de 24% pour le catalyseur supporté selon l'invention (INV-1) contre 30% pour le catalyseur supporté n'ayant subi ni traitement thermique, ni modification de surface (CE-3), et 43% pour le catalyseur supporté n'ayant pas subi de traitement thermique, mais comportant du PBI (CE-2).

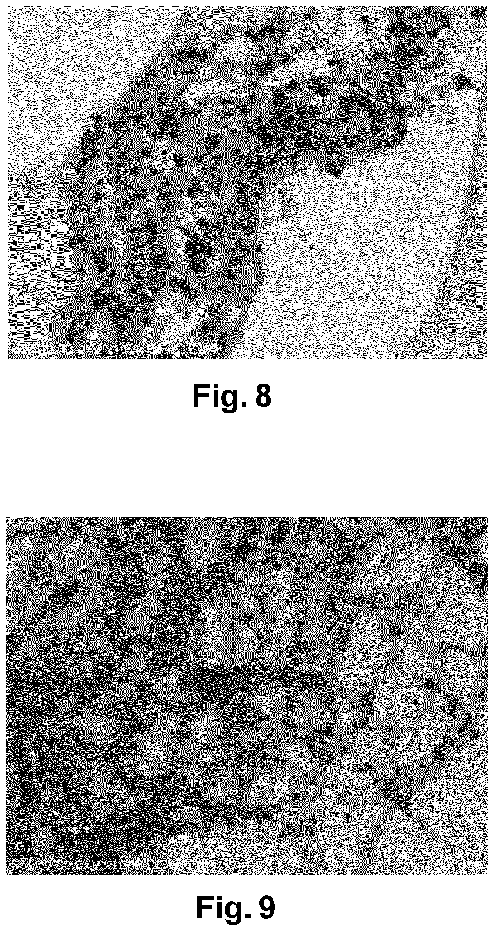

Les images STEM des figures 8 et 9 illustrent clairement que la taille des nanoparticules est plus importante dans le cas du catalyseur supporté n'ayant pas subi de traitement thermique, mais comportant du PBI (CE-2).

Ainsi, le traitement thermique couplé à une modification de la surface par du PBI du support carboné permet d'augmenter la performance et la durabilité de l'AME.

## Revendications

1. Procédé de préparation d'un catalyseur supporté comprenant au moins les étapes successives suivantes :
a) traitement thermique d'un matériau carboné (C), à une température comprise entre 1400°C et 2300°C,
le matériau carboné (C) étant choisi dans le groupe comprenant les nanotubes de carbone, le graphène, et les noirs de carbone,
b) obtention d'un matériau carboné traité thermiquement (Cₜ),
c) modification du matériau carboné Cₜ par mise en contact avec au moins un polybenzimidazole (PBI),
d) obtention d'un matériau carboné modifié (Cₜ-PBI),
e) dépôt de particules métalliques (M) sur le matériau carboné modifié (Cₜ-PBI),
f) obtention d'un catalyseur supporté (M/Cₜ-PBI).

2. Procédé de préparation d'un catalyseur supporté selon la revendication 1, ***caractérisé* en ce que** l'étape c) est réalisée, en solution, par adsorption d'au moins un PBI.

3. Procédé de préparation d'un catalyseur supporté selon la revendication 1 ou 2, ***caractérisé* en ce que** le PBI est choisi dans le groupe comprenant le poly[2,2'-(*m*-phénylène)-5,5'-bibenzimidazole] ; le poly[2,2'-(*p*-phénylène)-5,5'-bibenzimidazole] ; le poly(2,5-benzimidazole) ; le poly[2,2'-(*p*-oxydiphénylène)-5,5'-bibenzimidazole] ; le poly(2,2'-(m-phenylene)-5,5'-bibenzimidazole) ; le poly(2,6-(2,6-naphtyliden)-1,7-dihydrobenzo[1,2-d;4,5-d']diimidazole) ; le poly(2,2'-(2,6-naphtyliden)-5,5'-bibenzimidazole) ; le poly(2,2'-(2,6-pyridin)-5,5'-bibenzimidazole) ; les polybenzimidazoles partiellement ou totalement fluorés ; et leurs mélanges.

4. Procédé de préparation d'un catalyseur supporté selon l'une des revendications 1 à 3, ***caractérisé* en ce que** Cₜ-PBI présente un pourcentage massique de PBI compris entre 5% et 50%, par rapport à la masse de Cₜ-PBI.

5. Procédé de préparation d'un catalyseur supporté selon l'une des revendications 1 à 4, ***caractérisé* en ce que** les particules métalliques M sont des particules d'un métal ayant un degré d'oxydation égal à 0, ledit métal étant choisi dans le groupe comprenant le platine, les alliages de platine, l'iridium, le palladium, et les alliages de palladium nickel.

6. Procédé de préparation d'un catalyseur supporté selon l'une des revendications 1 à 5, ***caractérisé* en ce que** l'étape e) est réalisée par réduction d'un précurseur de particules métalliques en présence de Cₜ-PBI.

7. Procédé de préparation d'un catalyseur supporté selon l'une des revendications 1 à 6, ***caractérisé* en ce que** M/Cₜ-PBI présente un pourcentage massique de particules métalliques M compris entre 5% et 60%, par rapport à la masse de M/Cₜ-PBI.

8. Catalyseur supporté obtenu selon l'une des revendications 1 à 7.

9. Electrode comprenant un catalyseur supporté selon la revendication 8.

10. Utilisation de l'électrode selon la revendication 9 dans une pile à combustible à membrane échangeuse de protons, dans une batterie, ou dans un électrolyseur à membrane échangeuse de protons.
